# EUROPEAN PATENT APPLICATION

(11) **EP 1 569 194 A1**
(43) Date of publication of application: **31.08.2005**
(21) Application number: 04003252.6
(22) Date of filing: 13.02.2004
(51) Int. Cl.: G09G 3/34, G09G 5/10, H04M 1/725, H04Q 7/32

(54) **Portable electronic device controlled according to ambient illumination**

(71) Applicant: Sony Ericsson Mobile Communications AB, 221 88 Lund (SE)
(72) Inventor: Hey, Rolph, 131 35 Nacka (SE)
(74) Representative: Dahnér, Christer

(57) **Abstract**

Disclosed is a method, an alteration unit (100) and a portable electronic device (300,400) for enabling adjusting the luminance of a visual information presentation unit (110,302,402) of a portable electronic device (300,400), comprising sensing ambient light intensity; and increasing the luminance of the visual information presentation unit (110,302,402) if the sensed ambient light intensity increases and decreasing the luminance of the visual information presentation unit (110,302,402) if the sensed ambient light intensity decreases.

## Description

### TECHNICAL FIELD OF THE INVENTION

The present invention relates to a method and a unit for regulating a luminance of a portable electronic device, with respect to ambient light.

### DESCRIPTION OF RELATED ART

LEDs in displays and/or keypads are driven with a predefined electric current and the intensity is often constant irrespective of the surrounding. Since the battery capacity is of importance for portable electronic devices, a battery saving approach to LEDs in displays and/or keypads would be welcome, especially for displays since they are driving a relatively high electric current.

In the US patent application US2003/0210221, A1 to Aleksic a liquid crystal display (LCD) screen with a backlight is used. The backlight provides light to support visibility of the LCD screen in low light conditions, by having a detector identifying the amount of ambient light that is incident on the LCD screen. The power provided to the backligt is modulated based on the ambient light detected. As more ambient light is detected, less power is provided to the backlight.

In the US patent US5,818,553 to Koenck et al., a contrast controller for a liquid-crystal display maximizes a display contrast by using a light sensor to detect ambient light levels and light blocked by a LCD panel. The display contrast is maximized by maximizing the difference between the ambient and blocked light levels. Further contrast maximization is accomplished through variable control of the LCD backlight in accordance with sensed light levels.

In the UK patent application GB2308459 to Katada, a contrast of a liquid crystal display is controlled in dependence on the signals from a pair of photosensors, which sense ambient light levels. In a pager a first photosensor is a photodiode which receives light from the exterior of the casing of the pager while a second photosensor is a photodiode which detects the light from the backlight. In response from the photosensor a controller sends a contrast adjustment signal to a reference voltage generator. The LCD driver generates a driving voltage to adjust the brightness or contrast of the LCD in proportion to the intensity of a reference voltage.

Whereas both US5,818,553 and GB2308459 increases visibility of the LCD screen by increasing the contrast between blocked and ambient light levels, and ambient and backlight levels, respectively, US2003/0210221 supports visibility of the screen by detecting the amount of ambient light that is incident on the LCD screen and provides less power to the backlight as more ambient light is detected.

In darkness there is however no need to push a LCD luminance to its full intensity since it is clearly visible any lower luminance levels. Outdoors in brightness a bright screen may help to overcome the effect of the sunlight incident of the screen.

There is thus a need for providing a luminance of a screen or keypad which is adaptive with respect to outdoor/indoor brightness environment.

### SUMMARY OF THE INVENTION

The invention is thus directed toward solving the problem of providing a luminance of a visual information presentation unit, which is adaptive with respect to outdoor/indoor brightness environment.

This is achieved by adjusting a luminance of a visual information presentation unit of a portable electronic device, by increasing the luminance of the visual information presentation unit if a sensed ambient light intensity increases and decreasing the luminance of the visual information presentation unit if the sensed ambient light intensity decreases.

A first object of the present invention is to provide a method for adjusting a luminance of a visual information presentation unit of a portable electronic device, by increasing the luminance of the visual information presentation unit if a sensed ambient light intensity increases and decreasing the luminance of the visual information presentation unit if the sensed ambient light intensity decreases.

According to one aspect of this invention, this object is achieved by a method for enabling adjusting the luminance of a visual information presentation unit of a portable electronic device, comprising sensing ambient light intensity, and increasing the luminance of the visual information presentation unit if the sensed ambient light intensity increases and decreasing the luminance of the visual information presentation unit if the sensed ambient light intensity decreases.

A second aspect of the present invention is directed towards a method including the features of the first aspect, in which the step of increasing and decreasing comprises increasing the luminance of the visual information presentation unit if the sensed ambient light intensity increases above a first adaptive threshold, decreasing the luminance of the visual information presentation unit if the sensed ambient light intensity decreases below a second adaptive threshold, increasing the first and second adaptive thresholds if the sensed ambient light intensity increases above the first adaptive threshold, and decreasing the first and second adaptive threshold if the sensed ambient light intensity decreases below the second adaptive threshold.

A third aspect of the present invention is directed towards a method including the features of the first aspect, in which the luminance comprises the luminance of the picture elements of the visual information presentation unit.

A fourth aspect of the present invention is directed towards a method including the features of the first aspect, in which the step of sensing ambient light comprises sensing at least two spectral components of said ambient light, said method further comprising the steps of determining the ratio of the at least two spectral components of said ambient light, and adjusting settings related to the device based on the determination.

A fifth aspect of the present invention is directed towards a method including the features of the fourth aspect, in which the step of adjusting settings comprises, adjusting the ratio of the luminance components of a user input unit or the visual information presentation unit in dependence of the determined ratio of the at least two spectral components of the ambient light.

A sixth aspect of the present invention is directed towards a method including the features of the fourth aspect, in which the step of adjusting settings comprises, selecting a first communication mode if the ratio of the at least two spectral components of said ambient light increases above a first adaptive component threshold, selecting a second communication mode if the ratio of the at least two spectral components of said ambient light decreases below a second adaptive component threshold, increasing the first and second adaptive component threshold if the ratio of the at least two spectral components of said ambient light increases above the first adaptive component threshold,and decreasing the first and second adaptive component threshold if the ratio of the at least two spectral components of said ambient light decreases below the second adaptive component threshold.

A seventh aspect of the present invention is directed towards a method including the features of the fifth aspect, wherein adjusting the ratio of the luminance components of the user input unit or the visual information presentation unit comprises decreasing the ratio of the luminance components of the user input unit or the visual information presentation unit if the ratio of the at least two spectral components of said ambient light increases above a first adaptive component threshold, increasing the ratio of the luminance components of the user input unit or the visual information presentation unit if the ratio of the at least two spectral components of said ambient light decreases below a second adaptive component threshold, increasing the first and second adaptive component threshold if the ratio of the at least two spectral components of said ambient light increases above the first adaptive component threshold, and decreasing the first and second adaptive component threshold if the ratio of the at least two spectral components of said ambient light decreases below the second adaptive component threshold.

An eighth aspect of the present invention is directed towards a method including the features of the fourth aspect, wherein adjusting the ratio of the luminance components of the user input unit or the visual information presentation unit includes adjusting the levels of the luminance components, enabling colour temperature management.

A ninth aspect of the present invention is directed towards a method including the features of the first aspect, in which the step of sensing ambient light comprises sensing light that is ambient with respect to the visual information presentation unit and that essentially falls on said unit.

A tenth aspect of the present invention is directed towards a method including the features of the first aspect wherein the step of sensing ambient light comprises sensing ambient light that is scattered from an increased solid angle.

A second object of the present invention is to provide an alteration unit arranged be able to adjust the luminance of a visual information presentation unit of a portable electronic device, by increasing the luminance of the visual information presentation unit if a sensed ambient light intensity increases and decreasing the luminance of the visual information presentation unit if the sensed ambient light intensity decreases.

According to an eleventh aspect of the present invention, this object is achieved by an alteration unit arranged to be able to adjust the luminance of a visual presentation unit of a portable electronic device, said unit comprising a light sensing unit, arranged to sense ambient light essentially falling on the visual presentation unit, and a control unit, to which the light sensing unit is connected, wherein the control unit is arranged to receive information about sensed ambient light, and to control an increase of the luminance of the visual information presentation unit if the sensed ambient light intensity increases and to control a decrease of the luminance of the visual information presentation unit if the sensed ambient light intensity decreases.

A twelfth aspect of the present invention is directed towards an alteration unit including the features of the eleventh aspect wherein wherein the control unit further is arranged to control the increase of the luminance of the visual information presentation unit if the sensed ambient light intensity increases above a first threshold, to control a decrease of the luminance of the visual information presentation unit if the sensed ambient light intensity decreases below a second adaptive threshold, to control an increase of the first and second adaptive thresholds if the sensed ambient light intensity increases above said first adaptive threshold and control a decrease of the first and second adaptive thresholds if the sensed ambient light intensity decreases below said second adaptive threshold.

A thirteenth aspect of the present invention is directed towards an alteration unit including the features of the eleventh aspect wherein the light sensing unit is arranged to receive information about sensed at least two components of said ambient light, and wherein the control unit further is arranged to determine the ratio of the at least two spectral components of said ambient light, and arranged to adjust the ratio of the luminance components of a user input unit or the visual information presentation unit in dependence of the determined ratio of the at least two spectral components of the ambient light.

A fourteenth aspect of the present invention is directed towards an alteration unit including the features of the thirteenth aspect wherein the control unit is arranged to control a decrease of the ratio of the luminance components of the user input unit or the visual information presentation unit if the ratio of the at least two spectral components of said ambient light increases above a first adaptive component threshold, to control an increase of the ratio of the luminance components of the user input unit or the visual information presentation unit if the ratio of the at least two spectral components of said ambient light decreases below a second adaptive component threshold, to control an increase of the first and second adaptive component thresholds if the ratio of the at least two spectral components of said ambient light increases above said first adaptive component threshold and to control a decrease of the first and second adaptive component thresholds if the ratio of the at least two spectral components of said ambient light decreases below said second adaptive component threshold.

A fifteenth aspect of the present invention is directed towards an alteration unit including the features of the eleventh aspect wherein the control unit, when controlling the luminance of the visual information presentation unit, is arranged to control the luminance by the picture elements.

A sixteenth aspect of the present invention is directed towards an alteration unit including the features of the eleventh aspect wherein the light sensing unit is a camera unit that is positioned so as to be able to sense ambient light essentially falling on the visual information presentation unit.

A seventeenth aspect of the present invention is directed towards an alteration unit including the features of the sixteenth aspect wherein an ambient light scattering plate is positionable in front of the camera so that ambient light is scattered and detected by the camera within an enlarged solid angle.

A third object of the present invention is to provide a portable communication device arranged be able to adjust the luminance of a visual information presentation unit of said portable communication device, by increasing the luminance of the visual information presentation unit if a sensed ambient light intensity increases and decreasing the luminance of the visual information presentation unit if the sensed ambient light intensity decreases.

According to an eighteenth aspect of the present invention, this object is achieved by an portable communication device arranged to be able to adjust the luminance of a visual information presentation unit, comprising a visual information presentation unit, a light sensing unit, arranged to sense ambient light essentially falling on the visual presentation unit, and a control unit,
wherein the control unit is arranged to receive information about sensed ambient light, to control an increase of the luminance of the visual information presentation unit if the sensed ambient light intensity increases and to control a decrease of the luminance of the visual information presentation unit if the sensed ambient light intensity decreases.

A nineteenth aspect of the present invention is directed towards a portable communication device including the features of the eighteenth aspect wherein the control unit further is arranged to control the increase of the luminance of the visual information presentation unit if the sensed ambient light intensity increases above a first threshold, to control a decrease of the luminance of the visual information presentation unit if the sensed ambient light intensity decreases below a second adaptive threshold, to control an increase of the first and second adaptive thresholds if the sensed ambient light intensity increases above said first adaptive threshold and to control a decrease of the first and second adaptive thresholds if the sensed ambient light intensity decreases below said second adaptive threshold.

A twentieth aspect of the present invention is directed towards a portable communication device including the features of the eighteenth aspect further comprising a user input unit, connected to the control unit,
wherein the light sensing unit is arranged to receive information about sensed at least two components of said ambient light, and wherein the control unit further is arranged to determine the ratio of the at least two spectral components of said ambient light, and to adjust the ratio of the luminance components of the user input unit or the visual information presentation unit in dependence of the determined ratio of the at least two spectral components of the ambient light.

A twentyfirst aspect of the present invention is directed towards a portable communication device including the features of the twentieth aspect wherein the control unit is arranged to control a decrease of the ratio of the luminance components of the user input unit or the visual information presentation unit if the ratio of the at least two spectral components of said ambient light increases above a first adaptive component threshold, to control an increase of the ratio of the luminance components of the user input unit or the visual information presentation unit if the ratio of the at least two spectral components of said ambient light decreases below a second adaptive component threshold, to control an increase of the first and second adaptive component thresholds if the ratio of the at least two spectral components of said ambient light increases above said first adaptive component threshold and to control a decrease of the first and second adaptive component thresholds if the ratio of the at least two spectral components of said ambient light decreases below said second adaptive component threshold.

A twentysecond aspect of the present invention is directed towards a portable communication device including the features of the eighteenth aspect wherein the control unit, when controlling the luminance of the visual information presentation unit, is arranged to control the luminance by the picture elements.

A twentythird aspect of the present invention is directed towards a portable communication device including the features of the eighteenth aspect wherein the light sensing unit is a camera unit that is positioned so as to be able to sense ambient light essentially falling on the visual information presentation unit.

### The present invention has the following major advantage:

Battery power is conserved by adjusting the luminance of a visual information presentation unit of a portable electronic device, as the luminance is decreased when sensed ambient light intensity decreases, maintaining a good visibility of the information presented by said visual information presentation unit.

### BRIEF DESCRIPTION OF THE DRAWINGS

The present invention will now be described in more detail in realtion to the enclosed drawings, in which:
fig. 1 shows an alteration unit arranged to be able to adjust the luminance of a visual information presentation unit according to a preferred embodiment of the present invention,
figs. 2A, B present a method for adjusting the luminance of a visual information presentation unit according to a preferred embodiment of the present invention,
fig. 3 is a front perspective view of a portable electronic device arranged to be able to adjust the luminance of a visual information presentation unit, according to a preferred embodiment of the present invention; and
fig. 4 is a side perspective view of a portable electronic device arranged to be able to adjust the luminance of a visual information presentation unit, according to a preferred embodiment of the present invention.

### DETAILED DESCRIPTION OF THE EMBODIMENTS

The present invention thus relates to provision of a luminance of a visual information presentation unit, which is adaptive with respect to outdoor/indoor brightness environment.

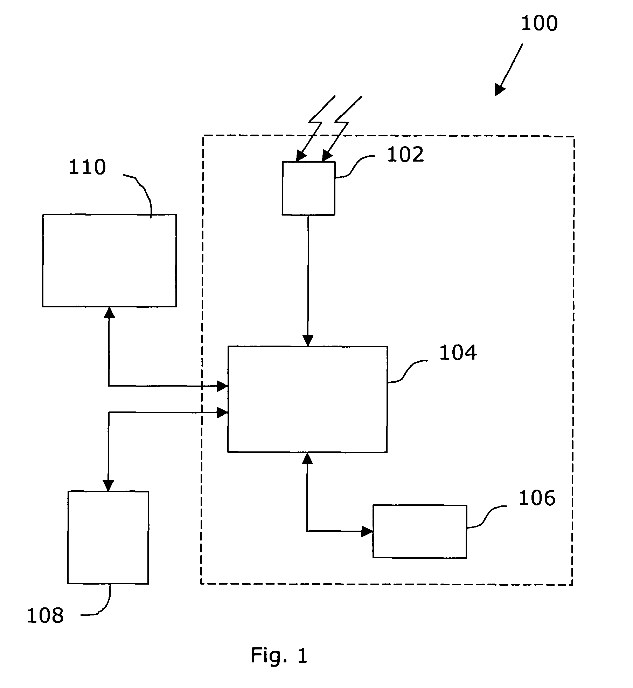

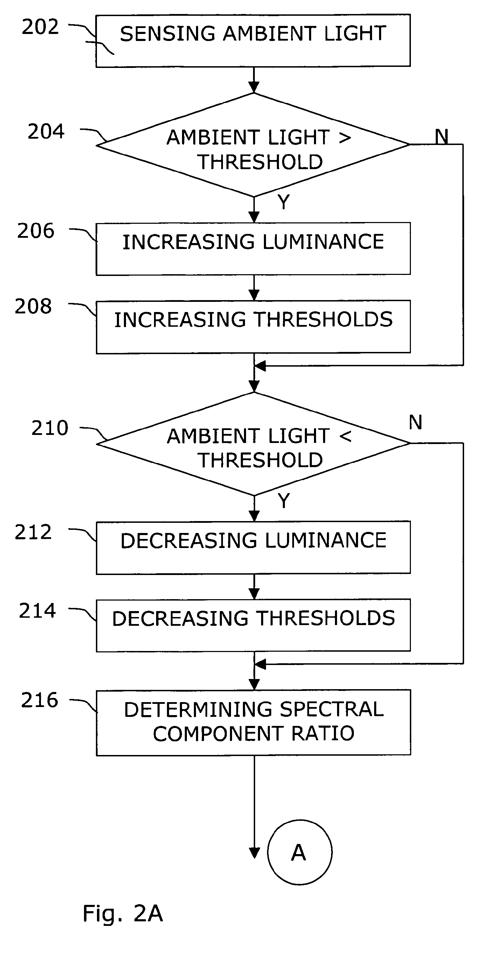

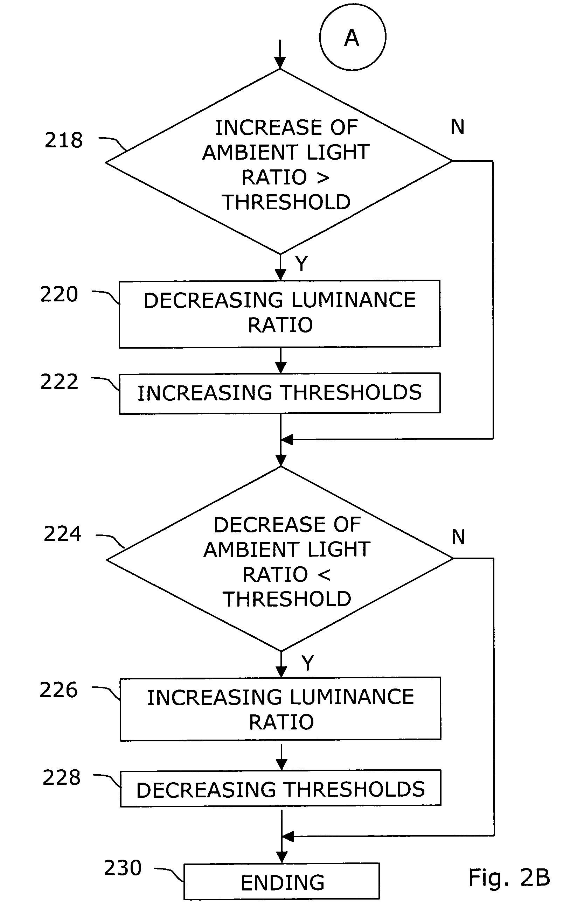

With reference to Fig. 1, showing an alteration unit arranged to be able to adjust the luminance of a visual information presentation unit according to a preferred embodiment of the present invention, and figs. 2A and 2B, presenting a method for adjusting the luminance of a visual information presentation unit according to a preferred embodiment of the present invention, the invention will be described.

In fig. 1, a light sensing unit, 102, for sensing incident ambient light intensisty is shown. According to a preferred embodiment of the present invention this light sensing unit has the capability to sense different frequency spectral components of the ambient light. In a preferred embodiment of the present invention this light sensing unit is a light sensitive camera that comprises light sensitive pixels, typically of three different types. A first type senses red light, a second type sense green light and a third senses blue light, forming the well-known RGB colour triplet.

The light sensing unit may be any other kind of light sensing unit than a light sensing camera considered it has the capabilities described herein.

The alteration unit futher contains a control unit, 104, arranged to receive information about sensed ambient light levels and to control the luminance of the visual information presentation unit, 110, in fig. 1, and/or the luminance of a user input unit, 108, in fig. 1. The control unit further controls an increase or decrease of light adaptive light thresholds and adaptive light component thresholds. The alteration unit, 100, in fig. 1 is here also equipped with a memory unit, 106, in which various settings can be stored, which settings can be adjusted upon change of ambient light level or the ratio between light components of the incident ambient light.

In a preferred embodiment of the method, the portable electronic device is a mobile phone, but may be any kind of portable electronic device preferably having a display.

Referring to fig. 2A, the method for adjusting the luminance of a visual information presentation unit according to a preferred embodiment of the present invention, starts with step, 202, sensing the ambient light that is incident on the portable electronic device containing the visual information presentation unit. According to a preferred embodiment of the present invention this step includes sensing frequency spectral components of said ambient light, as indicated above.

After sensing the ambient light, step 202, the method contains the step of determing whether the sensed ambient light intensity increases above a first adaptive threshold or not, step 204. This determination is performed by the control unit, 104, which receives information about the sensed ambient light intensity from the camera, and has access to pertinent threshold. This first threshold is typically an upper threshold of an upper and lower threshold pair. If the sensed ambient light intensity increases above the first adaptive threshold, the method further contains the step of increasing the luminance of the visual information presentation unit, step 206. According to a preferred embodiment of the present invention the visual information presentation unit is the display of the portable electronic device. Subsequent to increasing the luminance of the display, the step of increasing the first and second adaptive thresholds is performed, step 208. This step of increasing the luminance, step 206, and increasing said thresholds, step 208, are controlled by the control unit, 104, of the alteration unit, 100, shown in fig. 1.

The two adaptive thresholds are increased in order the update the threshols such that the upper and the lower threshold fall above and below the sensed ambient light intensity, respectively.

Increasing the the luminance means that in the case of incident light increasing such that the control unit determines that the visibility of the display is lowered, the luminance of the display is increased rather than decreased. Bringing the mobile phone outdoors at a bright day, when the light is strong, the luminance of the display is thus increased, thereby increasing the visibility of the information on the display.

It must be emphasized that the luminance of the display can be achieved in various way, considered that the picture elements themselves provide a light. For instance by using OLEDs, i.e. organic light emitting diodes that, each pixel is an active light generating unit. Another example is a transparent pixel that is made to shine itself by arranging a lighting from the backside, which light is reflected to the back of each pixel, causing each pixel or picture element to shine.

If the sensed ambient light intensity does not increase above the first, i.e. upper, adaptive threshold, in the step of determining whether the sensed ambient light intensity increases above the first adaptive threshold or not, step 204, the method offers the step of determining whether the sensed ambient light intensity decreases below a second adaptive threshold or not, step 210. This step is also preceeded by the step 208, increasing the first and second adaptive thresholds, if the sensed ambient light intensity increases above a first adaptive threshold in step 204.

If the control unit, 104, receives light information from the camera and determines that the sensed ambient light intensity decreases below the second, or lower, adaptive threshold, step 210, the method offers the step of decreasing the luminance of the display, step 212. In a subsequent step, the step of decreasing a first and second adaptive thresholds, step 214, is performed, again under the control of the control unit, 104.

Accordingly, in the control unit receive information about that the ambient light intensity sensed is low, the luminance of the display is decreased because the visibility of the display will still be good in this reduced brightness environment.

By reducing this display luminance the battery comsumption of the portable electronic device is decreased, thereby increasing the lifetime of each battery charge.

The method for enabling adjusting the luminance then comprises the step of determining the ratio of at least two sensed spectral component of the ambient light, step 216. This step follows the step of decreasing the first and second adaptive thresholds, step 214, if the sensed ambient light intensity has decreased below the second threshold, or follows the step 210, if the sensed ambient light intensity has not decreased below the second threshold.

According to a preferred embodiment of the present invention, the method comprises determining the relative ratios of three sensed spectral components of th eambient light in step 216. These threes frequency components are typically the red, green and blue, RGB, components.

According to this invention sensing the frequency contents of the ambient light that is incident on the camera, is a measure to obtain information on the light environment of the portable electronic device. The relative RGB component levels differ from one type of light to another. For example, outdoor light shows a different frequency contents as compared to indoor. Outdoor light typically contains a higher relative level of blue high frequency light as compared to indoor light. By determining the spectral conents of the ambient light that is incident of the camera, it is thus possible to determine whether the device is placed outdoors or indoors.

As we shall see below having information about the spectral components of the incident light, it is possible to adjust the relative colour component levels or the colour temperature, that is the brightness of the colours, of the display in order to achieve the correct colour impression to a user. A colour temperature management will hence be enabled. This is because the impression of a colour shown on the display is dependent on the the incident light, the modification can be performed to modify the colour presented in order to achieve an intended colour performance.

Now, the control unit, determines whether the ratio of said at least two sensed spectral components of the ambient light increases above a first, i.e. upper adaptive component threshold, or not, step 218, in fig. 2B. If the at least two sensed spectral components of the ambient light increases above said first or upper adaptive component threshold, a step of decreasing the ratio of the luminance components of the display, step 220, is performed. This means that if the ambient light is detected to have frequency properties that differ from the current light setting in the mobile phone, the luminance of the display is changed accordingly.

For instane if it is determined that the mobile phone is outdoors, the level of the blue light of the luminance of the display is slightly lowered, as compared with the setting for indoor light. Also, if it is determined that the mobile phone is placed indoors, where the light has gross contributions from electric lights, such as light bulbs or fluorescent light tubes, the colours of the display are modified accordingly in order to obtain the intended colour impression of the display.

In the case of positioning the mobile phone outdoors when the contributions from the natural sunlight are low such that the contributions from the electric light dominates, the luminance of the display are modified in a similar way as for indoor electric light, such that the intended colour impression will be presented to the user.

Also, the luminance of the key pad can be changed according to the ambient light frequency components sensed by the camera, according to a preferred embodiment of the present invention.

As the control unit has detemined that the control unit determines that the mobile phone receives gross contributions from electric light, the colour of the key pad can for instance change. According to a preferred embodiment the luminance of the key pad originates from the colur LEDs, which enables altering the colour peformance of the key pad in wide ranges. By using red, green and blue ligt the impression will be white light whereas switching of red and green results in blue light.

According to a preferred embodiment of the present invention, the colour of the key pad is switched to blue if the control unit determines a contribution from outdoor light together with a relatively weak overall incident light intensity.

Following the step of decreasing the luminance ratio, step 220, in fig. 2B, a step of increasing the first (upper) and second (lower) adaptive component thresholds, step 222, is performed. If on the other hand the control unit, 104, determines that the upper component threshold is not increased by the ratio of said at least two sensed spectral components of the ambient light, in step 218, the methods directly leads to determining whether or not the ratio of said at least two sensed spectral components of the ambient light decreases below the second or lower adaptive component threshold, step 224. In case the control unit, 104, determines that the ratio of said at the least two sensed spectral components of the ambient light decreases below the second, i.e. lower adaptive component threshold, in step 224, the step of increasing the ratio of the luminance components of the display, step 226, is performed. The method then comprises decreasing the upper and lower adaptive component thresholds, step 228, performed by the control unit, 104.

Now, after having reached step 228 or alternatively, in the case the ratio of said at the least two sensed spectral components of the ambient light did not decrease below the second, i.e. lower threshold, the method for enabling adjusting the luminance comprises the step of ending said method, step 230.

However, this method can be repeated at equidistant time intervalls, at short time intervalls, at the time of an alarm, at the time of a received message of any kind, or alternatively by pushing an arbitrary button on the mobile phone.

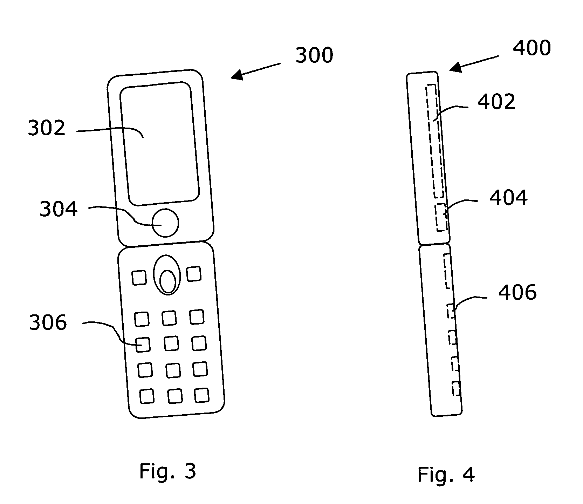

Moreover, as mentioned above, the portable electronic device according to a preferred embodiment of the present invention is a mobile phone. Accordingly figs. 3 and 4 show front and side views, perspectively, of said mobile phone, according to the invention, arranged to be able to adjust the luminance of its display. The mobile phone, 300, in fig. 3, comprises a display, 302, a light sensing unit, 304, in the form of a camera and a key pad, 306. In fig. 4, a side view shows the mobile phone, 400, the display, 402, the camera, 404, and the key pad, 406.

The light sensing unit, being a camera, according to a preferred embodiment of the present invention, may be equipped with a opalescent, semi transparent light scattering unit. This scattering unit may be a piece of semi transparent white plastic that is positioned in front of the camera, for instance in a standby mode of the camera. The light scattering effect of this piece has the effect of collecting light from a wider solid angle, as compared to the camera lens itself. This means that positioning the piece in front of the camera the light that the camera detects better corresponds to the ambient light as compared to the light that can be detected by the camera lens itself.

According to a preferred embodiment of the present invention a limited number of camera pixels are used to sense incident ambient light, as there is no need using all pixels. In order to sense the mentioned three ambient light frequency components a minimum of three different pixels, of different type, must be used. In order to detect the intensity of the incident ambient light intensity (one component) theoretically one single pixel is enough. Typically at least three pixels of different types are however used to sense the incident light. In order to determine the overall light intensity the sensed light intensity is averaged by integrating the incident ambient light over all three pixels.

In a picture taking mode of the camera, however, this opalescent light scattering unit is turned, slided or in another way moved away from the lens such that the scattering unit will not effect the light detected by the camera in this picture taking mode.

It is emphasized that this invention can be varied in may ways, of which the alternative embodiments below only are examples of a few. These different embodiments are hence nonlimiting examples. The scope of the present invention, however, is only limited by the subsequently following claims.

According to another embodiment of the present invention the communication mode is dependent on the spectral components of the ambient light. A first communication mode is used in a first type of networks, for instance WLAN or IP telephony, and a second communication mode is used in a second type of network, for instance GSM/UMTS. Upon detecting an outdoor light spectrum, a communication mode that is used in, for instance, GSM/UMTS is selected.

According to another embodiment of the present invention two or more light sensing units are used. Of these at least one is a light sensitive camera that is arranged so that it can sense the ambient light that is essentially incident on the visual information presentation unit.

According to yet another embodiment of the present invention two or more visual information presentation units are provided. These may be provided on different sides of the portable electronic device.

According to yet another embodiment of the present invention, other settings of the portable electronic device can be altered according to sensed ambient light. Examples of what can be altered of modified are the desk top of the visual information presentation unit, soft keys of said unit, font sizes of information presented on said unit, volume of alarm or ring signals, the colour depth of the presentation unit enabling a black and white presentation, and many more.

According to still yet another alternative of the present invention, the luminance of the key pad is switched off when the ambient light intensity increases above a predefined threshold and can be turned on when the ambient light intensity decreases below said threshold.

The present invention has the following advantages:

Enabling adjusting the luminance of a visual information presentation unit of a portable electronic device, battery power is conserved as the luminance is decreased when sensed ambient light intensity decreases, with maintained good visibility of the information presented by said visual information presentation unit.

The present invention makes use of a light sensing unit, that is already provided in most modern mobile phones, that is the camera. No extra light sensing units are thus required.

As the camera contains pixels that are sensitive to three various frequency components, any status or change in status may be used to customize and/or personalize a portable electronic device.

## Claims

1. A method for enabling adjusting the luminance of a visual information presentation unit (110, 302, 402) of a portable electronic device (300, 400), comprising the steps:
- sensing ambient light intensity (step 202); and
- increasing the luminance of the visual information presentation unit (110, 302, 402) if the sensed ambient light intensity increases and decreasing the luminance of the visual information presentation unit (110, 302, 402) if the sensed ambient light intensity decreases.

2. The method for enabling adjusting the luminance according to claim 1, in which the step of increasing and decreasing further comprises:
- increasing the luminance of the visual information presentation unit (step 206, 110, 302, 402) if the sensed ambient light intensity increases above a first adaptive threshold (step 204), decreasing the luminance of the visual information presentation unit (step 212, 110, 302, 402) if the sensed ambient light intensity decreases below a second adaptive threshold (step 210), increasing the first and second adaptive thresholds (step 208) if the sensed ambient light intensity increases above the first adaptive threshold (step 204), and decreasing the first and second adaptive threshold (step 214) if the sensed ambient light intensity decreases below the second adaptive threshold (step 210).

3. The method for enabling adjusting the luminance according to claim 1 or 2, in which the luminance comprises the luminance of the picture elements of the visual information presentation unit (110, 302, 402).

4. The method for enabling adjusting the luminance according to any one of claims 1-3, in which the step of sensing ambient light comprises sensing at least two spectral components of said ambient light, said method further comprising the steps:
- determining the ratio of the at least two spectral components of said ambient light (step 216), and
- adjusting settings related to the device based on the determination.

5. The method for enabling adjusting the luminance according to claim 4, in which the step of adjusting settings comprises, adjusting the ratio of the luminance components of a user input unit (108, 306, 406) or the visual information presentation unit (110, 302, 402) in dependence of the determined ratio of the at least two spectral components of the ambient light.

6. The method for enabling adjusting the luminance according to claim 4 or 5, in which the step of adjusting settings comprises, selecting a first communication mode if the ratio of the at least two spectral components of said ambient light increases above a first adaptive component threshold, selecting a second communication mode if the ratio of the at least two spectral components of said ambient light decreases below a second adaptive component threshold, increasing the first and second adaptive component threshold if the ratio of the at least two spectral components of said ambient light increases above the first adaptive component threshold,and decreasing the first and second adaptive component threshold if the ratio of the at least two spectral components of said ambient light decreases below the second adaptive component threshold.

7. The method for enabling adjusting the luminance according to claim 5 or 6, wherein adjusting the ratio of the luminance components of the user input unit (108, 306, 406) or the visual information presentation unit (110, 302, 402) comprises decreasing the ratio of the luminance components of the user input unit (step 220, 108, 306, 406) or the visual information presentation unit (110, 302, 402) if the ratio of the at least two spectral components of said ambient light increases above a first adaptive component threshold (step 218), increasing the ratio of the luminance components of the user input unit (108, 306, 406) or the visual information presentation unit (step 226, 110, 302, 402) if the ratio of the at least two spectral components of said ambient light decreases below a second adaptive component threshold (step 224), increasing the first and second adaptive component threshold (step 222) if the ratio of the at least two spectral components of said ambient light increases above the first adaptive component threshold (step 218), and decreasing the first and second adaptive component threshold (step 228) if the ratio of the at least two spectral components of said ambient light decreases below the second adaptive component threshold (step 224).

8. The method for enabling adjusting the luminance according to any one of claims 4-7, wherein adjusting the ratio of the luminance components of the user input unit (108, 306, 406) or the visual information presentation unit (110) includes adjusting the levels of the luminance components enabling colour temperature management.

9. The method for enabling adjusting the luminance according to any one of claims 1-8, in which the step of sensing ambient light (step 202) comprises sensing light that is ambient with respect to the visual information presentation unit (110, 302, 402) and that essentially falls on said unit.

10. The method for enabling adjusting the luminance according to any one of claims 1-9, wherein the step of sensing ambient light (step 202) comprises sensing ambient light that is scattered from an increased solid angle.

11. Alteration unit (100) arranged to be able to adjust the luminance of a visual presentation unit (110, 302, 402) of a portable electronic device (300, 400), said unit (100) comprising:
- a light sensing unit (102, 304, 404), arranged to sense ambient light essentially falling on the visual presentation unit (110, 302, 402), and
- a control unit (104), to which the light sensing unit (102, 304, 404) is connected,
wherein the control unit (104) is arranged to receive information about sensed ambient light, and to control an increase of the luminance of the visual information presentation unit (110, 302, 402) if the sensed ambient light intensity increases and to control a decrease of the luminance of the visual information presentation unit (110, 302, 402) if the sensed ambient light intensity decreases.

12. The alteration unit (100) according to claim 11, wherein the control unit (104) further is arranged to control the increase of the luminance of the visual information presentation unit (110, 302, 402, step 206) if the sensed ambient light intensity increases above a first threshold (step 204), to control a decrease of the luminance of the visual information presentation unit (110, 302, 402, step 212) if the sensed ambient light intensity decreases below a second adaptive threshold (step 210), to control an increase of the first and second adaptive thresholds (step 208) if the sensed ambient light intensity increases above said first adaptive threshold (step 204) and control a decrease of the first and second adaptive thresholds (step 214) if the sensed ambient light intensity decreases below said second adaptive threshold (step 210).

13. The alteration unit (100) according to claims 11 or 12, wherein the light sensing unit (102, 304, 404) is arranged to receive information about sensed at least two components of said ambient light, and wherein the control unit (104) further is arranged to determine the ratio of the at least two spectral components of said ambient light (step 216), and arranged to adjust the ratio of the luminance components of a user input unit (108, 306, 406) or the visual information presentation unit (110, 302, 402) in dependence of the determined ratio of the at least two spectral components of the ambient light.

14. The alteration unit (100) according to claim 13, wherein the control unit (104) is arranged to control a decrease of the ratio of the luminance components of the user input unit (108, 306, 406) or the visual information presentation unit (step 220, 110, 302, 402) if the ratio of the at least two spectral components of said ambient light increases above a first adaptive component threshold (step 218), to control an increase of the ratio of the luminance components of the user input unit (108, 206, 406) or the visual information presentation unit (step 226, 110, 302, 402) if the ratio of the at least two spectral components of said ambient light decreases below a second adaptive component threshold (step 224), to control an increase of the first and second adaptive component thresholds (step 222) if the ratio of the at least two spectral components of said ambient light increases above said first adaptive component threshold (step 218) and to control a decrease of the first and second adaptive component thresholds (step 228) if the ratio of the at least two spectral components of said ambient light decreases below said second adaptive component threshold (step 224).

15. The alteration unit (100) according to any one of claims 11-14, wherein the control unit (104), when controlling the luminance of the visual information presentation unit (100, 302, 402), is arranged to control the luminance by the picture elements.

16. The alteration unit (100) according to any one of claims 11-15, wherein the light sensing unit (102, 304, 404) is a camera unit that is positioned so as to be able to sense ambient light essentially falling on the visual information presentation unit (110, 302, 402).

17. The alteration unit according to claim 16, wherein an ambient light scattering plate is positionable in front of the camera (102, 304, 404) so that ambient light is scattered and detected by the camera (102, 304, 404) within an enlarged solid angle.

18. Portable communication device (300, 400) arranged to be able to adjust the luminance of a visual information presentation unit (100, 302, 402), comprising:
- a visual information presentation unit (102, 302, 402),
- a light sensing unit (102, 304, 404), arranged to sense ambient light essentially falling on the visual presentation unit (110, 302, 402), and
- a control unit (104),
wherein the control unit (104) is arranged to receive information about sensed ambient light, to control an increase of the luminance of the visual information presentation unit if the sensed ambient light intensity increases and to control a decrease of the luminance of the visual information presentation unit if the sensed ambient light intensity decreases.

19. The portable communication device (300, 400), according to claim 18, wherein the control unit (104) further is arranged to control the increase of the luminance of the visual information presentation unit (110, 302, 402, step 206) if the sensed ambient light intensity increases above a first threshold (step 204), to control a decrease of the luminance of the visual information presentation unit (110, 302, 402, step 212) if the sensed ambient light intensity decreases below a second adaptive threshold (step 210), to control an increase of the first and second adaptive thresholds (step 208) if the sensed ambient light intensity increases above said first adaptive threshold (step 204) and to control a decrease of the first and second adaptive thresholds (step 214) if the sensed ambient light intensity decreases below said second adaptive threshold (step 210).

20. The portable communication device (300,400), according to claims 18 or 19, further comprising:
- a user input unit (108, 306, 406), connected to the control unit (104),
wherein the light sensing unit (102, 304, 404) is arranged to receive information about sensed at least two components of said ambient light, and
wherein the control unit (104) further is arranged to determine the ratio of the at least two spectral components of said ambient light (step 216), and to adjust the ratio of the luminance components of the user input unit or the visual information presentation unit (110, 302, 402) in dependence of the determined ratio of the at least two spectral components of the ambient light (step 220, step 226).

21. The portable communication device (300,400), according to claim 20, wherein the control unit (104) is arranged to control a decrease of the ratio of the luminance components of the user input unit (108, 306, 406) or the visual information presentation unit (110, 302, 402, step 220) if the ratio of the at least two spectral components of said ambient light increases above a first adaptive component threshold (step 218), to control an increase of the ratio of the luminance components of the user input unit (108, 306, 406) or the visual information presentation unit (110, 302, 402, step 226) if the ratio of the at least two spectral components of said ambient light decreases below a second adaptive component threshold (step 224), to control an increase of the first and second adaptive component thresholds (step 222) if the ratio of the at least two spectral components of said ambient light increases above said first adaptive component threshold (step 218) and to control a decrease of the first and second adaptive component thresholds (step 228) if the ratio of the at least two spectral components of said ambient light decreases below said second adaptive component threshold (step 224).

22. The portable communication device (300, 400), according to any one of claims 18-21, wherein the control unit (104), when controlling the luminance of the visual information presentation unit (110, 302, 402), is arranged to control the luminance by the picture elements.

23. The portable communication device (300, 400) according to any one of claims 18-22, wherein the light sensing unit (102, 304, 404) is a camera unit that is positioned so as to be able to sense ambient light essentially falling on the visual information presentation unit (110, 302, 402).
